Europäisches Patentamt

European Patent Office

Office européen des brevets

(11) Numéro de publication : **0 344 033 B1**

(12) **FASCICULE DE BREVET EUROPEEN**

(45) Date de publication du fascicule du brevet :
**22.07.92 Bulletin 92/30**

(51) Int. Cl.$^5$ : **B60N 2/12**

(21) Numéro de dépôt : **89401273.1**

(22) Date de dépôt : **05.05.89**

(54) **Dispositif de verrouillage pour glissière de guidage de siège de véhicule.**

(30) Priorité : **19.05.88 FR 8806730**

(43) Date de publication de la demande :
**29.11.89 Bulletin 89/48**

(45) Mention de la délivrance du brevet :
**22.07.92 Bulletin 92/30**

(84) Etats contractants désignés :
**BE DE ES GB IT NL SE**

(56) Documents cités :
**FR-A- 2 371 313**
**FR-A- 2 376 009**
**GB-A- 2 033 738**
**US-A- 4 508 385**
**US-A- 4 563 044**

(73) Titulaire : **CESA COMPAGNIE EUROPEENNE DE SIEGES POUR AUTOMOBILES**
**20, rue Paul-Vaillant-Couturier**
**F-92300 Levallois-Perret (FR)**

(72) Inventeur : **Fourrey, François**
**34, Rue du Petit Chênois**
**F-25200 Montbeliard (FR)**
Inventeur : **Deley, Serge**
**1, Rue d'Audincourt**
**F-25230 Seloncourt (FR)**
Inventeur : **Coussemacq, Jean-Marc**
**5, rue Provence**
**F-25700 Valentigney (FR)**

(74) Mandataire : **Mestre, Jean et al**
**c/o CABINET LAVOIX 2, place d'Estienne d'Orves**
**F-75441 Paris Cédex 09 (FR)**

EP 0 344 033 B1

Jouve, 18, rue Saint-Denis, 75001 PARIS

**Description**

La présente invention concerne les sièges de véhicules automobiles ou analogue qui sont réglables en translation et tout particulièrement les sièges avant de véhicules automobiles à deux portières.

En effet, sur ces sièges avant le dispositif de réglage en translation est utilisé non seulement pour assurer le confort de l'utilisateur en lui permettant de placer le siège à la distance désirée du tableau de bord, mais également pour accroître le passage disponible vers l'arrière du véhicule en complétant le basculement du dossier.

Or, il est très désagréable pour un utilisateur, par exemple pour le conducteur d'un véhicule, d'être obligé de régler à nouveau son siège chaque fois qu'il le quitte pour permettre l'accès à l'arrière du véhicule. Il a bien été proposé de munir les glissières de guidage du siège à côté du dispositif de verrouillage permettant d'immobiliser la glissière dans la position désirée, d'un système de repérage de la position du siège jouant le rôle de mémoire. Toutefois, les systèmes de repérage connus sont généralement complexes, et en outre ils s'ajoutent au dispositif de verrouillage à l'extérieur de la glissière de sorte que l'ensemble présente un encombrement important souvent dissuasif.

Un état de la technique est illustré par les documents GB-A- 2 033 738 et US-A- 508 385. Il y a lieu de noter que les solutions qui y sont décrites sont compliquées et ne permettent pas d'atteindre les buts visés par l'invention.

La présente invention a pour but de remédier à ces inconvénients en fournissant un dispositif qui permet à la fois d'immobiliser le siège dans sa position de réglage et de retrouver cette position après un déplacement momentané.

Cette invention a en effet pour objet un dispositif de verrouillage pour glissière de guidage d'un siège de véhicule du type exposé par le document GB-A- 2 033 738 dont les parties nécessaires à l'invention sont indiquées dans le préambule de la revendication principale et dont les particularités distinctives ressortent notamment de la partie caractérisante de celle-ci.

Dans un tel dispositif, le verrou joue à la fois le rôle d'organe d'immobilisation des deux éléments de la glissière l'un par rapport à l'autre, et de mémoire permettant de retrouver la position de réglage choisie après un déplacement momentané du siège vers l'avant. Ce dispositif comporte donc un nombre de pièces extrêmement faible et est, de plus, entièrement contenu à l'intérieur de la glissière.

Selon un mode de réalisation préféré, l'axe de commande a une section non circulaire qui est complémentaire de celle d'un trou du verrou et est inscrite dans la section circulaire d'un passage de traversée de l'organe interne.

Par ailleurs, l'axe de commande du pivotement du verrou est repoussé élastiquement vers ce dernier et est relié à un dispositif de commande de sa rotation et de son déplacement axial.

La description ci-dessous d'un mode de réalisation, donné à titre d'exemple non limitatif et représenté aux dessins annexés, fera d'ailleurs ressortir les avantages et caractéristiques de l'invention. Sur ces dessins:

La figure 1 est une vue en coupe d'une glissière munie d'un dispositif de verrouillage selon l'invention, dans un plan vertical passant par l'axe de manoeuvre.

Les figures 2, 3 et 4, sont des vues schématiques, en coupe suivant la ligne 2-2 de la Fig. 1, montrant l'organe de verrouillage dans trois positions différentes.

La figure 5 est une vue schématique, en coupe suivant la ligne 5-5 de la Fig.1, montrant la glissière et le dispositif de verrouillage en position de déplacement momentané.

La figure 6 est une vue en coupe du verrou suivant la ligne 6-6 de la Fig.5.

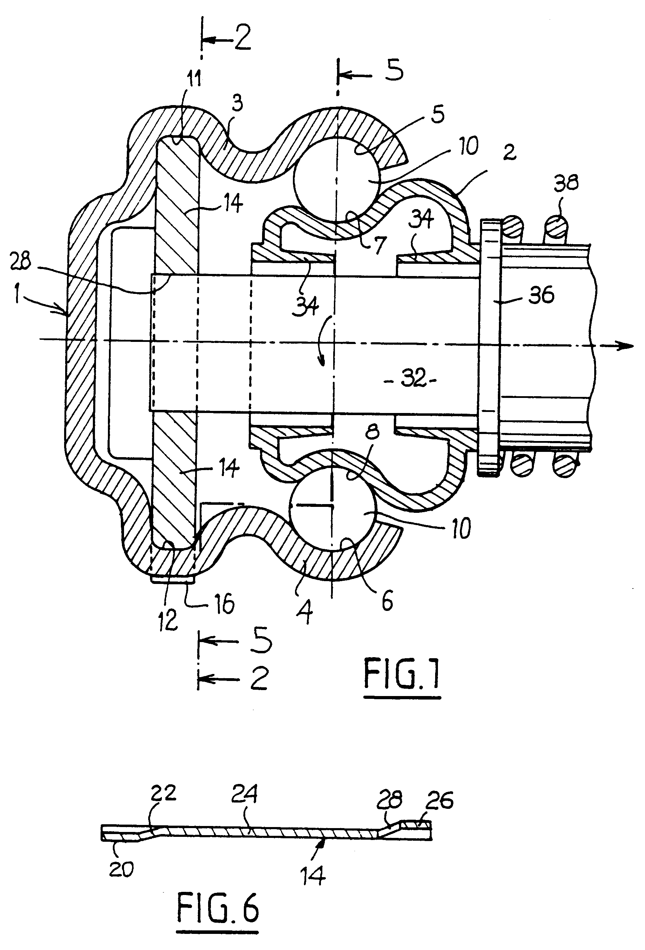

La glissière de guidage d'un siège de véhicule représentée sur la Fig.1 comporte de la manière habituelle un élément externe 1, de forme générale en U, qui coopère avec un élément interne 2 de façon à permettre leur déplacement axial relatif.

Dans le mode de réalisation représenté, les branches 3 et 4 de l'élément externe 1 sont recourbées à leur extrémité de façon à définir deux gorges longitudinales internes respectivement 5 et 6 ouvertes l'une vers l'autre. De même l'élément interne 2 a des parois latérales externes recourbées de façon à constituer des gorges longitudinales externes respectivement 7 et 8, qui coopèrent avec les gorges 5 et 6 de l'élément externe 1 pour recevoir des billes 10.

L'un de ces éléments, par exemple l'élément externe 1, est fixé au plancher du véhicule tandis que l'autre, l'élément interne 2, est solidaire du siège du véhicule. Dans ce cas, l'élément interne 2 a de préférence une section tubulaire et est réalisé directement par déformation du tube d'armature d'assise du siège.

L'élément externe 1 comporte, en outre, dans ses deux parois latérales opposées, respectivement 3 et 4, deux rainures en regard 11 et 12 dans lesquelles est monté coulissant un organe de verrouillage 14.

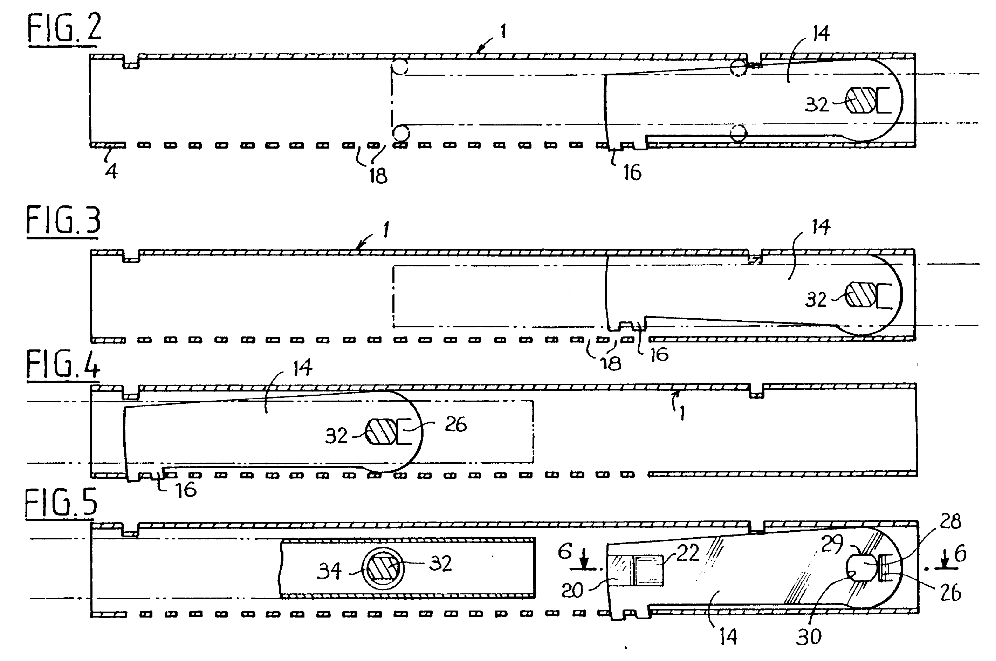

Le verrou 14 est un élément allongé de forme générale plate qui va en se rétrécissant d'une extrêmité à l'autre et comporte à son extrêmité la plus étroite des dents latérales 16 de coopération avec des crans ou trous 18 ménagés dans la paroi 4 de l'élément externe 1 (Fig.2). Au droit de ces dents 16, le verrou 14 comporte un premier bossage 20 qui est relié par une rampe inclinée 22 à sa partie principale plane 24. Un second bossage 26, plus haut que le premier bossage 20, est également prévu à l'extrêmité opposée du verrou 14, mais il est en saillie sur la face opposée du verrou et la partie inclinée qui le relié à la partie plane 24 comporte un trou 28 (Fig.6).

Le trou 28 du verrou 14 est délimité par deux faces planes opposées 29 séparées par deux portions de cylindre 30, comme le montre plus particulièrement la Fig.5. Dans ce trou 28 est engagé l'extrémité d'un axe de commande 32 ayant une section de forme complémentaire à celle du trou 28. Le second bossage 26 forme butée d'arrêt du déplacement en translation de l'axe de commande 32, entre le trou 28 et le bord extrême éloigné des dents 16 du verrou.

L'axe 32 a une longueur suffisante pour traverser non seulement le verrou 14 mais également l'élément interne 2 dans lequel il est guidé par des paliers de section circulaire 34 réalisés dans le tube 2 par des canons rapportés ou de préférence par fluo-perçage.

A l'extérieur de cet élément interne 2 l'axe 32 est muni d'un collet 36 sur lequel appuie l'une des extrêmités d'un ressort hélicoïdal 38 dont l'extrêmité opposée est appliquée contre un organe fixe du siège organe qui n'a pas été représenté pour ne pas compliquer la figure.

De même, l'axe 32 est relié à son extrêmité opposée au verrou 14 à un dispositif de manoeuvre qui peut être de tout type approprié et pour cette raison n'a pas été représenté.

Le dispositif de manoeuvre comporte un organe permettant de provoquer la rotation de l'axe 32 sur lui-même et par suite, le pivotement du verrou 14 dans l'élément externe 1. Au cours de ce pivotement le verrou 14 passe ainsi de la position de verrouillage représentée sur la Fig.2, position dans laquelle les dents 16 sont encastrées dans les trous 18 de l'élément externe 1, à une position déverrouillée, telle que représentée sur la Fig.3, dans laquelle les dents 16 sont sorties des trous 18 et le verrou 14 est libre de coulisser dans l'élément externe 1.

La section de l'axe 32 étant inscrite à l'intérieur de la section circulaire du passage délimité par les paliers 34, la rotation de cet axe ne modifie pas la position de l'élément interne 2. Par contre, le verrou 14 étant libéré, le siège solidaire de l'élément interne 2 peut être poussé de façon à provoquer le glissement de cet élément interne dans l'élément externe 1 sur les billes 10. Ce déplacement en translation entraîne, bien entendu, l'axe 32 ainsi que le verrou 14 qui coulisse dans l'élément externe 1. L'ensemble du dispositif de verrouillage est ainsi entraîné avec le siège jusqu'au moment où ce dernier atteint la position de réglage désirée. A ce moment, un pivotement en sens inverse de l'axe 32 replacera le verrou 14 en position de verrouillage, c'est-à-dire les dents 16 dans les trous 18, comme le montre la Fig.4.

L'utilisateur du siège peut ainsi déplacer ce dernier par rapport au tableau de bord et le placer à la distance qui est le plus confortable pour lui.

Le dispositif de manoeuvre de l'axe 32 comporte également des moyens pour déplacer cet axe axialement par rapport au verrou 14 et aux paliers 34. Ce déplacement axial permet de faire sortir l'extrêmité de l'axe 32 du trou 28 du verrou 14 et ainsi de rendre ces deux organes indépendants. A ce moment, un déplacement en translation du siège et de l'élément interne 2 entraîne l'axe 32 comme précédemment mais n'a aucune influence sur le verrou 14 qui reste dans la position verrouillée, c'est-à-dire dans la position de réglage qui a été choisie précédemment par l'utilisateur.

Le siège, c'est-à-dire l'élément interne 2, peut ainsi être poussé jusqu'à l'extrêmité avant de la glissière en libérant un accès maximal vers l'arrière sans que le verrou 14 ne soit déplacé. Par contre, lorsque cet accès n'est plus nécessaire et que le siège est ensuite reculé vers l'arrière jusqu'au voisinage du verrou 14, l'axe 32 repoussé par le ressort 38, pénètre dans la cavité délimitée par le bossage 20 et rencontre la rampe 22 du verrou 14 qui le guide et le centre par rapport à ce verrou. En continuant à se déplacer, l'axe 32 glisse sur la partie centrale 24 du verrou 14 puis vient buter contre le second bossage 26, ce qui l'arrête. Sous l'action du ressort 38, l'axe 32 pénètre alors dans le trou 28 et reprend sa position d'entraînement du verrou 14 et d'immobilisation longitudinale de l'élément interne 2 par rapport à ce dernier. Comme le verrou 14 est resté dans la position de réglage choisie par l'utilisateur, le siège est revenu dans cette position de réglage automatiquement sans que l'utilisateur ait eu besoin d'intervenir.

Le verrou 14 a ainsi joué un rôle de mémoire permettant de retrouver de manière sûre et automatique la position de réglage précédente.

En utilisant ainsi un même organe pour les deux fonctions et en plaçant cet organe à l'intérieur de la glissière, on obtient avec un encombrement minimum et un nombre de pièces très faible, un dispositif qui assure de manière efficace à la fois le verrouillage et le repère de la position de réglage.

Bien entendu, la glissière peut être disposée verticalement comme représentée sur la Fig.1 ou, au contraire, être placée horizontalement, un ressort ou autre organe de rappel ramenant de préférence automatiquement le verrou 14 dans sa position de verrouillage.

De même il apparaîtra clairement que l'élément interne peut être l'élément fixe, tandis que l'élément externe est fixé au siège du véhicule sans que cela modifie la réalisation ou le fonctionnement du dispositif.

**Revendications**

1. Dispositif de verrouillage pour glissière de guidage de siège de véhicule comportant un élément externe (1) de forme générale en U, entourant au moins partiellement un élément interne (2), et un verrou pivotant (14) de blocage coopérant avec des trous ou crans (18) de l'élément externe (1), ledit dispositif permettant un déplacement relatif momentané des éléments interne (2) et externe (1) depuis et vers une position choisie de réglage longitudinal, caractérisé en ce que le verrou (14) est monté coulissant dans l'élément externe (1) et est relié à l'élément interne (2) par un axe (32) de commande de son pivotement qui est susceptible de se déplacer axialement par rapport à ces deux éléments (1, 2) entre une position de commande du pivotement du verrou et une position écartée du verrou verrouillé dans ladite position choisie de réglage longitudinal.

2. Dispositif suivant la revendication 1, caractérisé en ce que l'axe de commande (32) a une section non circulaire qui est complémentaire de celle d'un trou (28) du verrou (14) et est inscrite dans la section circulaire d'un passage (34) de traversée de l'élément interne (2).

3. Dispositif suivant l'une des revendications 1 et 2, caractérisé en ce que l'axe de commande (32) est repousse élastiquement vers le verrou (14).

4. Dispositif suivant l'une des revendications précédentes, caractérisé en ce que le verrou (14) est un organe sensiblement plat, allongé, qui est muni de dents (16) en saillie latérale à l'une de ses extrémités et d'un trou (28) de réception de l'axe de commande (32) à son extrémité opposée.

5. Dispositif suivant la revendication 4, caractérisé en ce que le verrou (14) comporte un bossage (26) formant butée d'arrêt du déplacement en translation de l'axe de commande (32) entre le trou (28) et son bord extrême éloigné des dents (16).

6. Dispositif suivant la revendication 5, caractérisé en ce que le verrou forme au voisinage des dents (16), un premier bossage (20) en direction opposée au bossage (26) formant butée d'arrêt et une rampe (22) de guidage de l'axe de commande (32).

7. Dispositif suivant l'une quelconque des revendications précédentes, caractérisé en ce que le verrou (14) est rappelé élastiquement vers la position de verrouillage.

**Patentansprüche**

1. Eine Verriegelungsvorrichtung für eine Sitzführungsschiene von Fahrzeugen, die ein allgemein U-förmiges externes Element (1) aufweist, das mindestens teilweise ein internes Element (2) umgibt, sowie einen schwenkbaren Blockierriegel (14), der mit Bohrungen oder Rastkerben (18) des externen Elementes (1) zusammenwirkt, wobei diese Vorrichtung eine zeitweilige relative Verschiebung der internen (1) und externen (2) Elemente aus und in eine gewählte Position der Längsregulierung erlaubt, dadurch gekennzeichnet, daß die Verriegelung (14) gleitend in dem externen Element (1) aufgenommen und mit dem internen Element (2) über eine Welle (32) für die Betätigung der Schwenkbewegung verbunden ist, die sich axial zu diesen beiden Elementen (1, 2) zwischen einer Position der Betätigung der Schwenkbewegung der Verriegelung und einer entfernten Position der in der gewünschten Position der Längsregulierung eingerasteten Verriegelung bewegen kann.

2. Eine Vorrichtung nach Anspruch 1, dadurch gekennzeichnet, daß die Betätigungswelle (32) einen nicht kreisförmigen Querschnitt aufweist, der dem Querschnitt einer Bohrung (28) der Verriegelung (14) entspricht und innerhalb des kreisförmigen Querschnittes einer Passage (34) für den Durchtritt des internen Elementes (2) liegt.

3. Eine Vorrichtung nach einem der Ansprüche 1 und 2, dadurch gekennzeichnet, daß die Betätigungswelle (32) elastisch gegen die Verriegelung (14) gedrückt wird.

4. Eine Vorrichtung nach einem der vorausgegangenen Ansprüche, dadurch gekennzeichnet, daß die Verriegelung (14) ein weitgehend ebenes längliches Element ist, das mit einer Verzahnung (16) versehen ist, die in seitlicher Richtung vorspringend an einem seiner Enden und an seinem gegenüberliegenden Ende in einer Bohrung (28) für die Aufnahme der Betätigungswelle (32) vorgesehen ist.

5. Eine Vorrichtung nach Anspruch 4, dadurch gekennzeichnet, daß die Verriegelung (14) einen Vorsprung (26) aufweist, der einen Anschlag für die translatorische Verschiebung der Betätigungswelle (32) zwischen der Bohrung (28) und seiner von der Verzahnung (16) im Abstand angeordneten äußersten Kante bildet.

6. Eine Vorrichtung nach Anspruch 5, dadurch gekennzeichnet, daß die Verriegelung in der Nähe der Verzahnung (16) einen ersten Vorsprung (20) gegenüber dem den Anschlag bildenden Vorsprung (26) und einer Führungsrampe (22) für die Betätigungswelle (32) bildet.

7. Eine Vorrichtung nach einem der vorausgegangenen Ansprüche, dadurch gekennzeichnet, daß die Verriegelung (14) elastisch in die Verriegelungsposition zurückgezogen wird.

**Claims**

1. A locking device for the guiding slide of a vehicle seat, or the like, comprising an external element (1), generally U-shaped, surrounding at least partially an internal element (2) and a pivoted locking bolt (14) cooperating with holes or notches (18) in the external element (1), said device allowing temporary relative displacement of the internal element (2) and external element (1), from and towards a chosen longitudinal adjustment position, characterised in that the bolt (14) is slidably mounted inside the external element (1) and is joined to the internal element (2) by a pin (32) controlling its pivoting, which pin is capable of being displaced axially relative to these two elements (1,2) between a position of control of the pivoting of the bolt and a position separated from the bolt locked in the said chosen longitudinal adjustment position.

2. A device according to claim 1, characterised in that the actuating pin (32) has a non-circular cross-section which complements that of a hole (28) of the bolt (14) and is inscribed inside the circular cross-section of a through-passage (34) of the internal element (2).

3. A device according to one of claims 1 and 2, characterised in that the actuating pin (32) is pushed back resiliently towards the bolt (14).

4. A device according to one of the preceding claims, characterised in that the bolt (14) is a substantially flat elongate member which is provided with teeth (16) projecting laterally at one of its ends and with a hole (28) for receiving the actuating pin (32) at its opposite end.

5. A device according to claim 4, characterised in that the bolt (14) has a boss (26) forming a limit stop for the translational displacement of the actuating pin (32), between the hole (28) and its end edge removed from the teeth (16).

6. A device according to claim 5, characterised in that the bolt forms in the vicinity of the teeth (16), a first boss (20) in the opposite direction to the boss (26) forming the limit stop and a ramp (22) for guiding the actuating pin (32).

7. A device according to one of the preceding claims, characterised in that the bolt (14) is restored resiliently towards the locking position.

FIG.1

FIG.6

FIG.2

FIG.3

FIG.4

FIG.5

EP 0 344 033 B1